Europäisches Patentamt

European Patent Office

Office européen des brevets

(11) Publication number: **0 273 671**
**A2**

# EUROPEAN PATENT APPLICATION

(21) Application number: **87311258.5**

(22) Date of filing: **21.12.87**

(51) Int. Cl.⁴: **G01N 21/25**

(30) Priority: **31.12.86 GB 8631084**

(43) Date of publication of application:
**06.07.88 Bulletin 88/27**

(84) Designated Contracting States:
**AT BE CH DE FR GB IT LI LU NL SE**

(71) Applicant: **AMERSHAM INTERNATIONAL plc**
**Amersham Place**
**Little Chalfont Buckinghamshire HP7**
**9NA(GB)**

(72) Inventor: **Chadney, Donovan Colin**
**Baryon Henton**
**Oxford OX9 4AP(GB)**

(74) Representative: **Boydell, John Christopher et**
**al**
**Stevens, Hewlett & Perkins 5 Quality Court**
**Chancery Lane**
**London, WC2A 1HZ(GB)**

(54) **Shutter assembly.**

(57) A shutter assembly for selectively allowing fluid or radiation through an aperture positioned at a selected aperture position chosen out of a plurality of potential aperture positions. The assembly comprises a plurality of shutter leaves (20 to 26) sandwiched between a bottom plate (18) and top plate (19). Shutter leaves (20 to 22) are constrained to move between just two positions in a first (Y) direction and leaves (23 to 26) are constrained to move between just two positions in a second (X) direction. Each leaf is formed with a pattern of apertures arranged in such a way as to align with certain apertures in other shutter leaves so that, for at least some combinations of the possible positions of the various shutter leaves, at least one aperture in each shutter is in alignment to thereby provide at least one through-aperture from one side of the shutter to the other.

FIG. 2

## "SHUTTER ASSEMBLY"

This invention relates to a shutter assembly for selectively allowing fluid or radiation such as light through an aperture positioned at a selected aperture position chosen out of a plurality of potential aperture positions.

It is envisaged that such a shutter assembly would have widespread use in many fields - such as directing fluid along a particular path; however the primary intended usage of the shutter assembly by the applicant is in association with a reader for microtritration plates. A microtitration plate is a tray containing a large number of small test tubes, known as wells, which are used for testing purposes in biochemical and allied fields. A commonly used microtitration plate comprises 96 wells in an array of 12 x 8. The wells, indeed the whole plate, are usually made of plastics material and the wells may be opaque or transparent, depending upon the particular test to be performed. Many of the tests carried out in the wells rely on measuring the light emitted by the well. The light may either be generated within the well itself, as in luminescent testing, or may be passed through the well from an external light source, as in optical density testing. In the former case, the wells are made of opaque material, in the latter case, of transparent material.

Since the whole object of the microtitration plate is to enable many tests to be carried out simultaneously, a need arises for obtaining and measuring the light output from just one well, and blocking the remainder, so that the result of the test in that one well can be ascertained. It is necessary to cycle around all of the wells, one by one, and measure the light output from each in turn.

The shutter assembly of the present invention is able to allow selection of just a single well to monitor, to the exclusion of all the others.

According to the invention, the shutter assembly comprises a plurality of parallel shutter leaves and means for sliding each said shutter leaf relative to the remainder and wherein each shutter leaf is formed with a pattern of apertures arranged in such a way as to align with certain apertures in other shutter leaves so that, for at least some positions of each shutter leaf at least one aperture in each shutter leaf is in alignment to thereby provide at least one through-aperture from one side of the shutter to the other.

It is preferred that the shutter assembly is binary so that it can be readily controlled by computer. To this end, each shutter leaf is constructed to move between just two fixed positions, each of which positions can be represented as logical "0" or logical "1". A pattern of apertures for each leaf and corresponding movement can then be worked out to provide the necessary end result: namely that any one set of leaf positions provides a through aperture at a unique position. Thus it will be seen that the minimum number of shutter leaves necessary will be dictated by the number of required aperture positions: 2 leaves will give the potential for up to $2^2$ or 4 aperture positions; 3 leaves will give $2^3$; 4 leaves will give $2^4$, and so on. In the particular application envisaged, that of selective uncovering of the wells of a microtitration plate, a typical array of 12 x 8 or 96 wells will require 7 shutter leaves giving a potential $2^7$ or 128 aperture positions.

In theory all of the shutter leaves could be arranged to move along a single axis. However, physical constraints may well dictate that two mutually orthogonal axes of movement are used. For convenience we will refer to these axes as the X and Y axes through-out. Thus some leaves will be constrained to move only along the X-axis, others only along the Y-axis. The choice of how many leaves move along one axis, and how many along the other, or even if only a single axis of movement is used, will depend upon certain physical constraints, as will become apparent.

For most efficient use of shutter leaves, and therefore to allow only the minimum number of leaves to be used for any particular application, the pattern of apertures on each leaf must be carefully selected. One particular method, for the binary system, is described herein. The pattern of apertures is organised in such a way that every leaf moves an identical distance.

In order that the invention may be better understood an embodiment thereof will now be described by way of example only and with reference to the accompanying drawings in which:-

Figure 1 is a diagrammatic side sectional view of a reader incorporating the shutter assembly of the present invention;

Figure 2 is a diagrammatic exploded view of the shutter assembly of the invention;

Figures 3 and 11 are views of the bottom and top plates respectively of the shutter assembly of the invention;

Figures 4 to 10 are views of the seven shutter leaves incorporated in the shutter assembly of the present invention;

Figures 12 and 13 are side and perspective views respectively of the underside illuminator box forming part of the reader of Figure 1; and

Figure 14 is a side view of an alternative design of illuminator box.

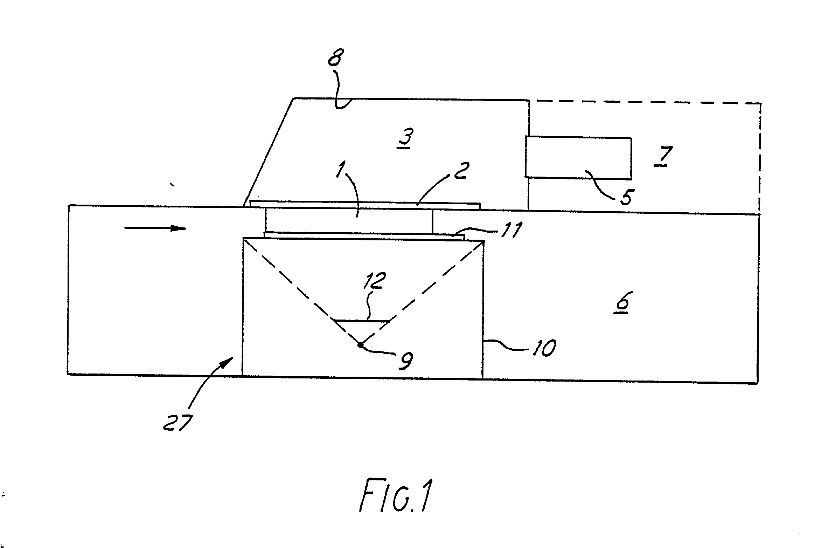

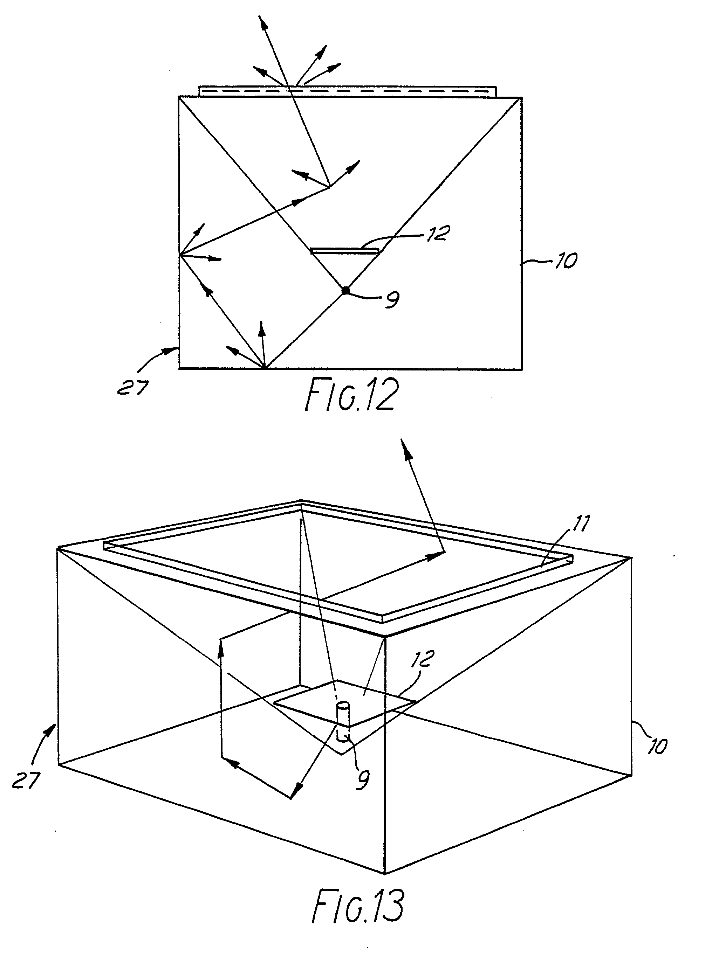

Figure 1 shows a reader for analysing the result of reactions going on in the wells in a microtitration tray 1. In the particular example to be described, the tray has a total of 96 wells arranged in a 12 x 8 array. Above the tray 1 is a shutter assembly 2 which is arranged to block off the light output from all but a selected one of the wells. Light from the chosen well passes into a light integrating enclosure 3 from where it passes to a photo-multiplier tube (PMT) or solid state photodiode detector. 5 Associated electronic circuitry (not shown) within enclosures 6 and (if needed) 7 amplifies and processes the output from detector 5 to indicate the results of the reaction. The integrating enclosure 3 is shaped as shown to reduce the surface area of enclosure 3 so as to approximate to a true integrating enclosure. The internal surface 8 of enclosure 3 is coated with a diffusing and highly (>98%) reflecting coating shown in greater detail in Figures 12 and 13. The illuminator comprises a light source 9 such as a constant-current driven LED, or a radioactively driven light source, within a light integrating box 10. The box 10 is for convenience rectangular in shape and is coated on its inside surface with a diffusing and highly reflective coating, as above. The top surface of the box forms the light outlet aperture and is covered with a scattering plate 11, for example of ground glass. A baffle 12 is fitted just above the light source and is arranged so as to cast a shadow right across the outlet aperture so that no direct light from the source 9 is able to pass through the plate 11.

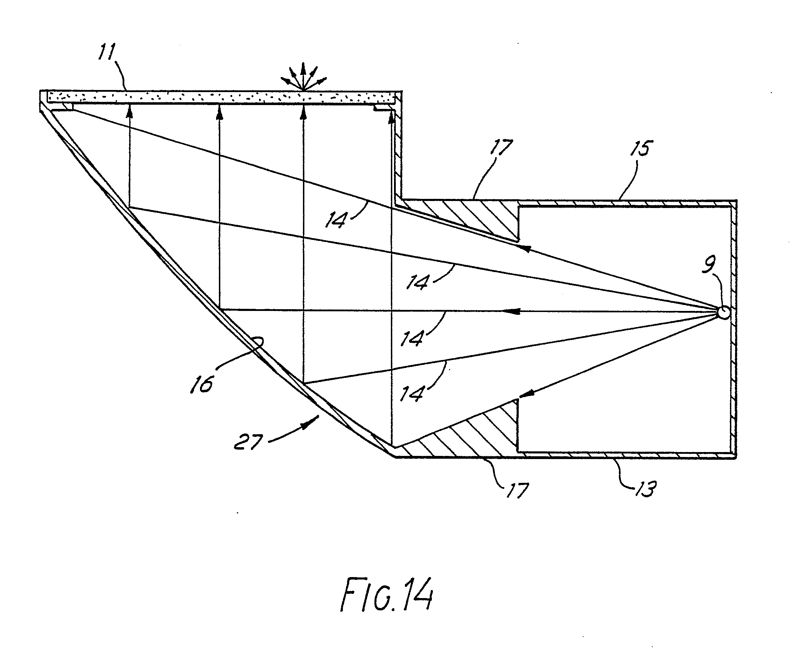

An alternative form of illuminator is shown in Figure 14, and comprises an enclosure 13 having a light source 9 and output aperture covered by a scattering plate 11, for example of ground glass. The enclosure is shaped in such a way that all optical paths 14 from the source 9 to the plate 11 are of equal length. The rectangular-section right hand end 15 of the enclosure is blackened to reduce reflection; the surface 16 opposite the source takes the form of part of a parabolic mirror whose focus is at the light source. The triangular-section area 17, which are blackened, are in order to prevent direct illumination of the output aperture by the source.

The uniform illuminator 27 of whatever form, may act as a light source during optical density testing, but its main purpose is for calibration purposes. To this end, it will be appreciated that the integrating enclosure 3 is not perfect which means that wells in different positions in the microtitration tray will differently illuminate the detector 5. To compensate for this the uniform illuminator may be used to individually test the well positions, without any sample present, store the result and then apply an appropriate factor to the proper sample test result received from each well. The calibration tests may be carried out by an associated computer (not shown) and is preferably done automatically and constantly throughout the time that the machine is switched on by cycling around the individual wells by means of the shutter assembly, to be described, and monitoring and storing the result.

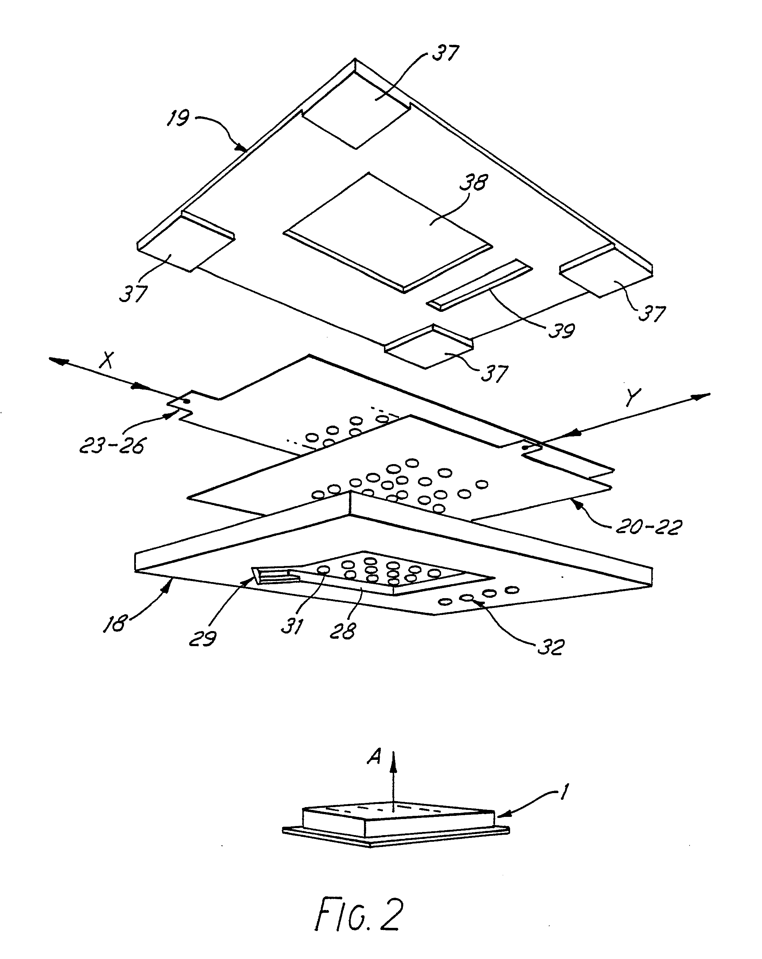

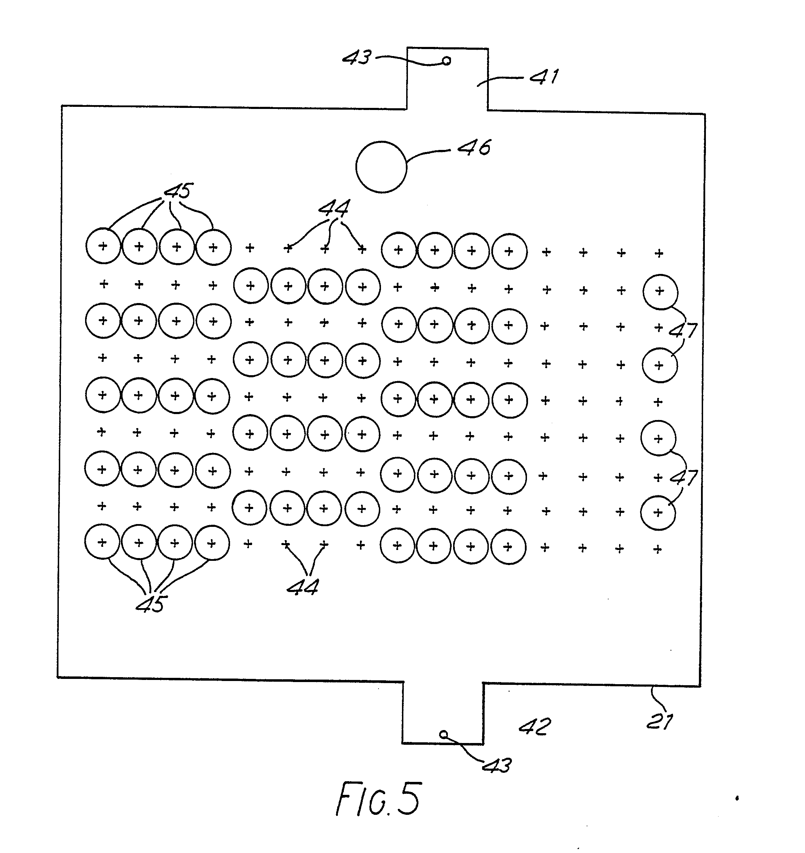

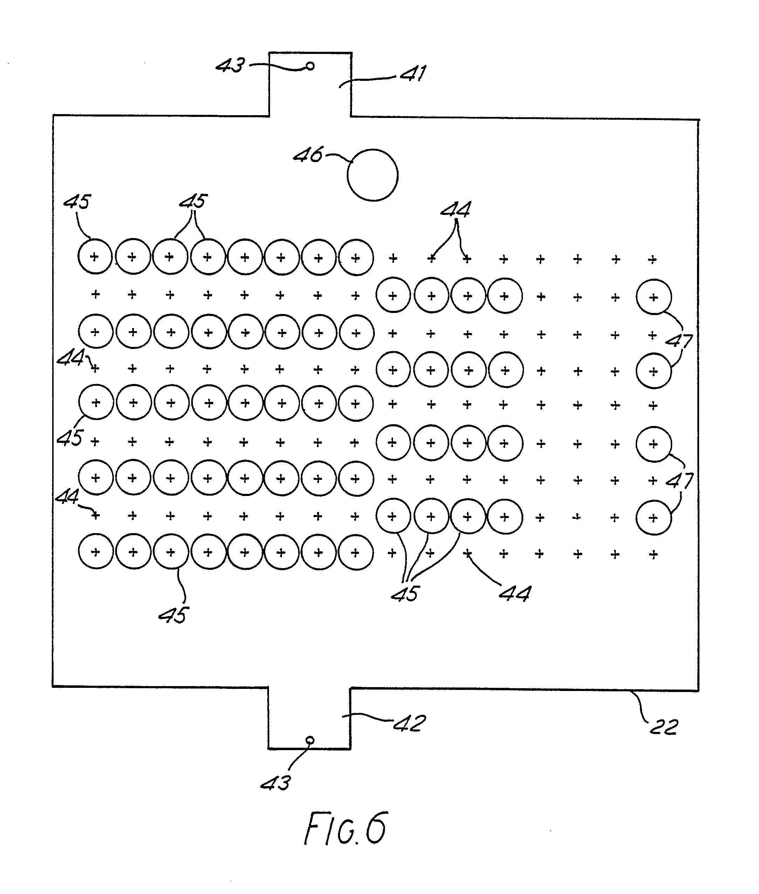

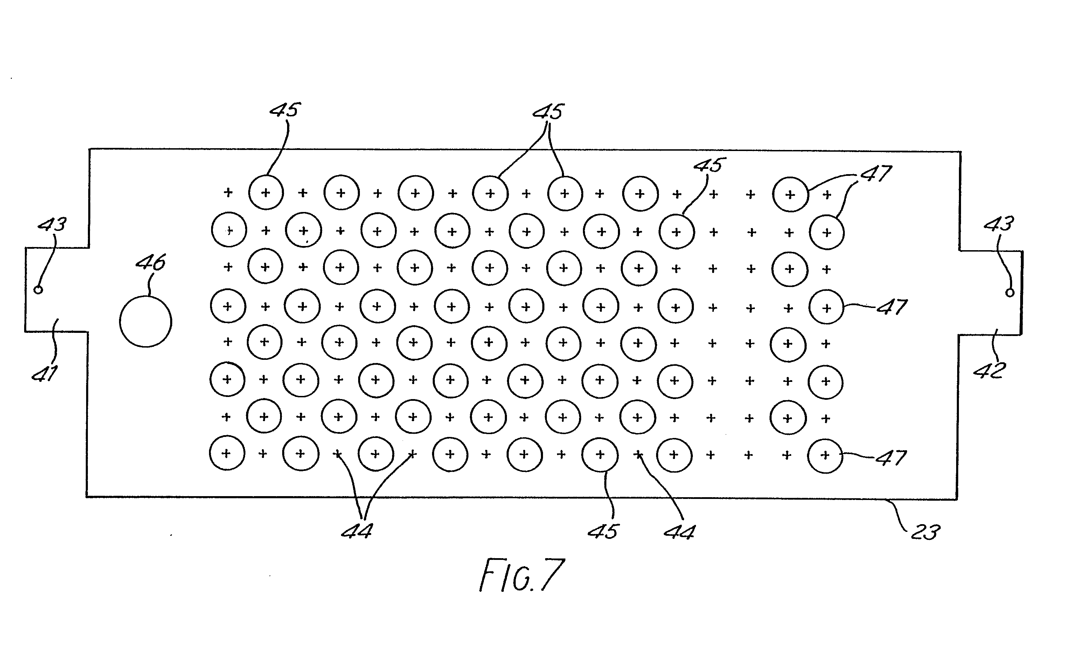

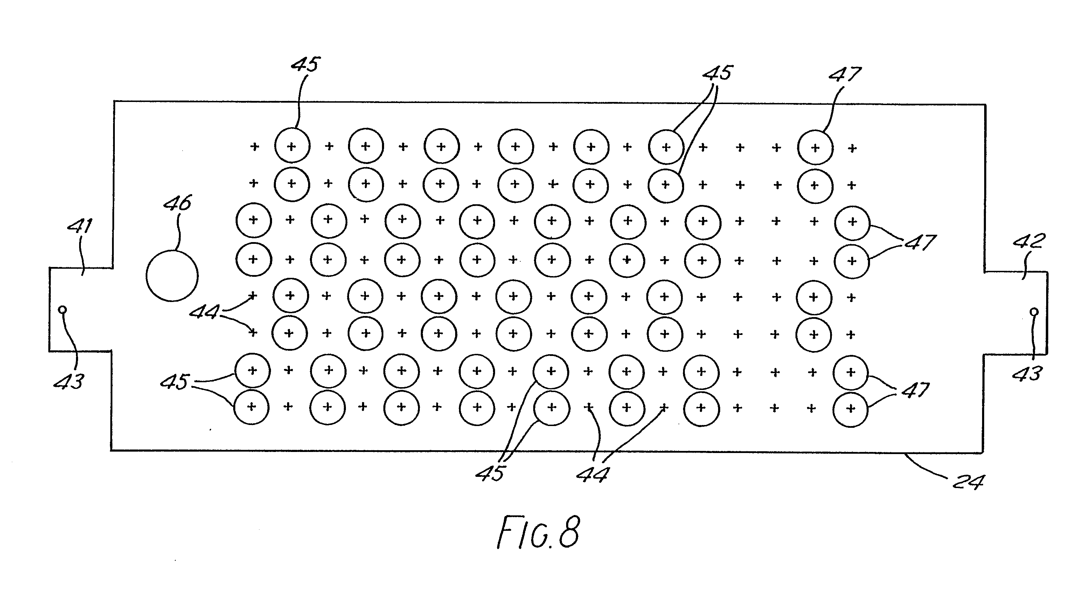

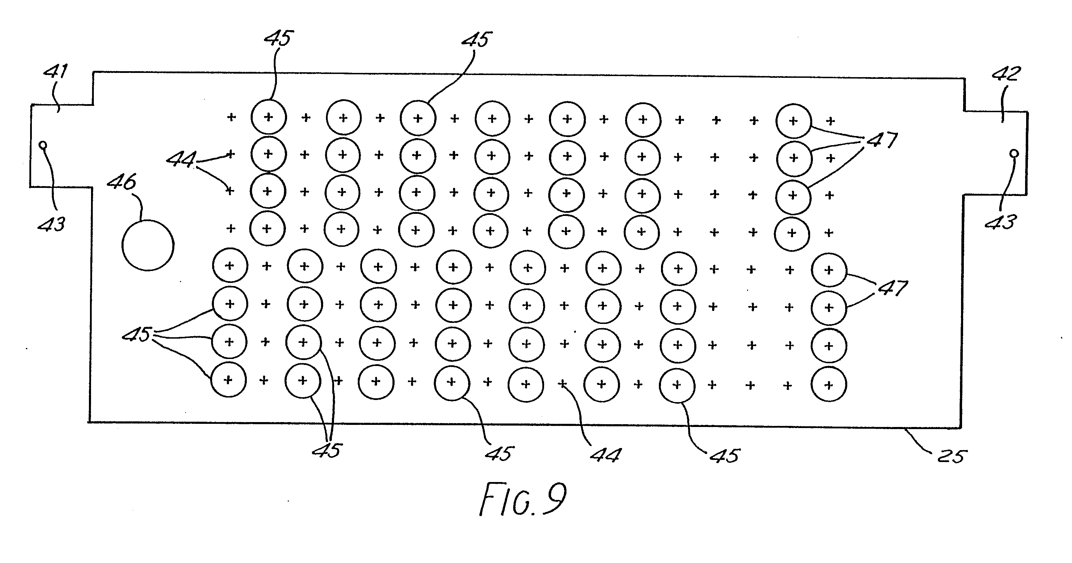

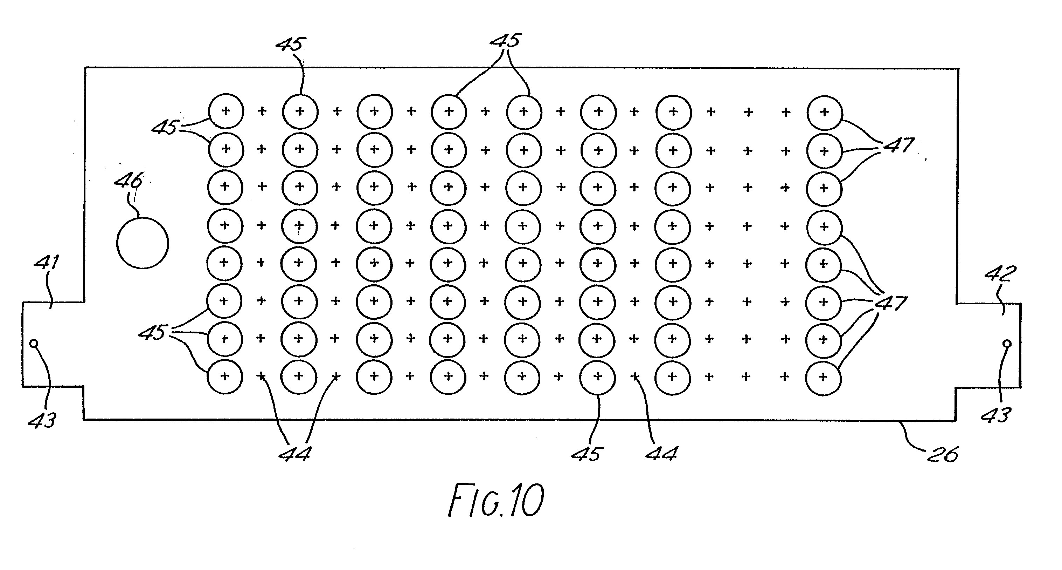

The shutter assembly 2 is shown in detail in Figures 2 to 11.

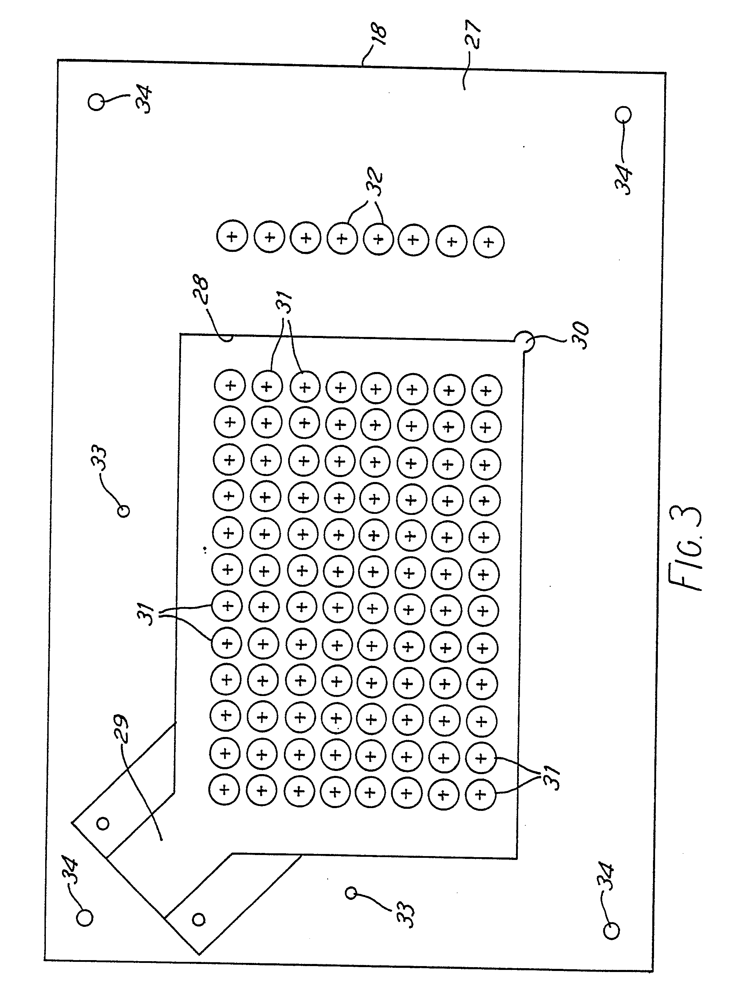

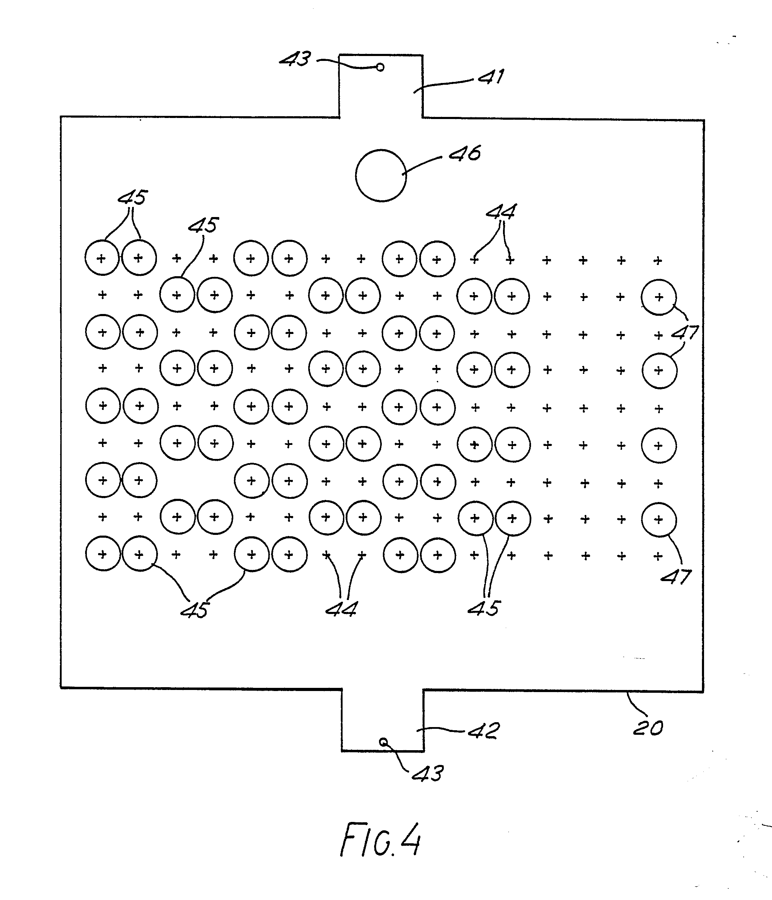

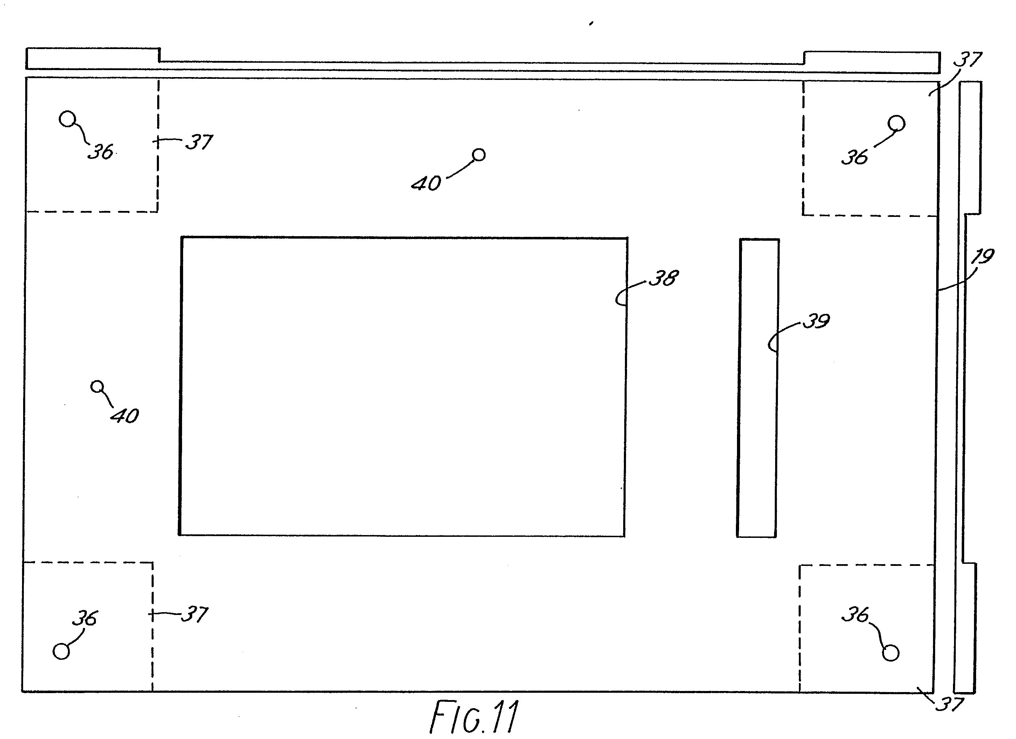

Each of Figures 3 to 11 of the drawings show a component of the assembly. In outline the assembly comprises a bottom plate 18 (Figure 2) and top plate 19 (Figure 11) between which are sandwiched seven shutter leaves 20 to 26 (Figures 4 to 10) which are slidable with respect to one another.

The bottom plate comprises a 1.2 cm thick aluminium alloy plate 27 having a generally rectangular portion 28 cut out from its underside to give a material thickness of 1 mm. This rectangular cut-out portion provides a secure location for the microtitration plate 1 which, in use of the apparatus, is located, wells uppermost, within the rectangular portion 28 and pushed firmly against the material of the plate 27 by virtue of being sandwiched between this and the scattering plate 11 of the illuminator 27. In order to ensure accurate location, a roller assembly 29 or other means may be used to push the microtitration plate 1 into the registration corner 30 of the portion 28 as the microtitration plate is raised into the portion 28 (arrow A, Figure 2).

The material forming the top of cut-out portion 28 is provided with a plurality of 7.5 mm diameter apertures 31, each in registry with a single well within the microtitration plate 1. A further eight apertures 32 are provided to the side of the cut-out portion 28 for calibration purposes. Two 3 mm diameter holes 33 are provided to locate pins, also 3 mm in diameter, which pass between the top and bottom plates and through the shutter leaves. A hole 34 is formed in each corner to receive the shank of a respective bolt (not shown) for holding the assembly together.

The top plate 19 is formed of a sheet 35 of 1.5 mm thick aluminium alloy and is of similar shape and dimensions to the bottom plate. Holes 36 are formed in the corners of the plate 19 in registry with holes 34 in the bottom plate so that the two plates can be attached together by means of bolts. Each corner area 37 of the sheet 35 is formed with a 5 mm thick upstanding portion, shown in dotted outline, to thereby define a 3.5 mm thick separation between the top and bottom plates. A rectangular aperture 38 is formed in the sheet 35 in registry with the cut-out portion 28 of the bottom plate. A further rectangular aperture 39 overlies the group of apertures 32 in the bottom plate, and a pair of 3mm diameter holes 40 are in regustry with holes 33 to mount the other end of the aforementioned pins.

3

Each of the shutter leaves 20 to 26 is formed from a 0.5 mm thick aluminium sheet which is blackened to reduce light leakage between apertures. The sheet is formed with a pair of oppositely-disposed lugs 41. 42 having holes 43 for the attachment of a pull wire (not shown) linked to an associated solenoid. Thus, each shutter leaf is associated with two solenoids.

Each sheet is marked on the drawings with a plurality of potential aperture positions. These positions are marked with a plus sign, such as at 44. At some of these apertures positions an aperture 45 of 1 mm greater diameter than apertures 31 is formed to make up an aperture pattern, different for each leaf. The seven leaves are divided into two groups according to their direction of movement: the leaves 20 to 22 are constrained to slide in the vertical direction in Figure 11; the leaves 23 to 26 are constrained to slide in the horizontal direction in Figure 11. For convenience the leaves 20 to 22 will be referred to as the Y-axis leaves, while the leaves 23 to 26 will be referred to as the X-axis leaves. The leaves slide against the appropriate facing edges of the upstanding corner areas 37 on the top sheet 35.

Movement of the leaves is effected by the aforementioned solenoids, operably attached to the lugs 41, 42. However, movement is limited by the presence of the 3 mm pins which extend between the holes 33,40 in the bottom and top plates. One of these pins extends through a 12 mm diameter aperture 46 formed in each leaf: the uppermost pin in Figure 11 passes through the aperture 46 in the Y-axis leaves 20 to 24; the leftmost pin in Figure 11 passes through the aperture 46 in the X-axis leaves 25 and 26. The leaves are thus capable only of movement corresponding to movement of the appropriate 3 mm pin passing across the diameter of the corresponding aperture 46. With a pin size of 3 mm and aperture size of 12 mm, the maximum movement of the leaves is 9 mm which is the pitch between adjacent wells in the titration plate 1. This same pitch is used for the aperture locations 44.

The solenoids are such as to move the leaves by the maximum extent possible. Thus to move a leaf one way, one of the solenoids for that leaf is energised to slide the leaf, relative to the others, to one limit position. If it is desired to move the leaf to the other limit position, the other solenoid is energised. Once the solenoid has moved the leaf to its limit position, it is de-energised; inter-leaf friction avoids the need to maintain energisation to hold the leaf in position.

The arrangement is such that, at each limit position, at least some of the aperture locations 44 in each leaf are in registry with corresponding apertures 31 in the bottom plate 18 and hence with the wells.

The pattern of apertures 45 on each sheet will now be discussed. It will be noted that the object of the exercise is to obtain a complete through aperture at a single selected aperture location, this being effected when, at any one location, all of the apertures in each of the seven leaves are in registry, thus allowing light to pass from the well, through the appropriate aperture 31 and thence through the aligned shutter leaf apertures 45 to emerge into the light integrating enclosure 3.

The apertures 45 in each plate are arranged, with respect to the aperture locations 44, in distinct groups. The number of apertures in each group is a power of two: $2^0$, $2^1$, $2^2$, $2^3$, and so on, for each leaf. Thus, in the Y-axis leaves the number of apertures 45 in each group is as follows:-

Leaf 20 : $2^1$ = 2

Leaf 21 : $2^2$ = 4

Leaf 22 : $2^3$ = 8

In the X-axis, the number of apertures in each group is as follows:-

Leaf 23 : $2^0$ = 1

Leaf 24 : $2^1$ = 2

Leaf 25 : $2^2$ = 4

Leaf 26 : $2^3$ = 8

Strictly speaking it is necessary to start again at the beginning - i.e. $2^0$, $2^1$ and so on - for each axis; however it will be seen that there would be no point in including two "$2^0$" leaves since these are symmetrical in the X and Y directions and therefore only one is needed (in this case, the X axis one).

The spacing between the apertures is as follows: in the direction of movement of the leaf, the pattern for any one line must be alternate apertures and spaces - i.e. aperture - space - aperture - space -aperture etc. In the direction at right angles to the direction of movement the pattern is again alternate, but this time by group - for example in the "$2^1$" shutter leaf where there are two apertures in each group, the pattern is 2 apertures alternating with 2 spaces.

With this pattern of apertures, the apertures of a group for any one leaf of a particular axis will cover half of the apertures in a group of the next higher order leaf. Thus the zeroth order ($2^0$) leaf is the least significant leaf for each axis while the highest order leaf is the most significant leaf for each axis. The shutters can be addressed via their respective solenoids by means of a 7-bit word, giving $2^7$ or 128 possible aperture positions, of which 96 are used in this particular application.

Thus addressing the shutters with a particular 7 bit word will enable a single through-aperture in a unique position to be obtained. In order to move to another unique through-aperture position the 7 bit word simply needs to be changed, this causing one or more shutter leaves to move from one limit position to the other. Using an 8-bit computer the aperture location can readily be cycled through, thus effectively "scanning" the wells of the microtitration plate.

In addition to the main apertures 45 in each leaf, there are a number of auxiliary apertures 47 associated with a number of calibration light sources (not shown) positioned under the shutter arrangement behind respective apertures 32 in the bottom plate.

There has been described a 7-leaf shutter assembly which is able to provide random access to any well position of an associated microtitration plate by a binary selection method. The pattern of holes in each shutter leaf has been chosen in such a way that every shutter moves an identical distance, being the well pitch of 9 mm. By making the apertures 31 in the bottom plate to a precision tolerance and making the corresponding apertures 45 in the shutter leaves 1 mm greater in diameter, a considerably tolerance can be allowed in the maximum 9 mm shutter leaf displacement, to a maximum of ± 0.5 mm. This enables the above described pin locator method to be used without undue concern for slackness and/or wear.

A total of fourteen solenoids are used to actuate the shutter leaves and, in binary terminology the solenoids of each leaf may be referred to respectively as the logic 0 and logic 1 solenoids. By avoiding the use of return springs and similar devices the shutter leaves may be slid from end to end and allowed to rest in their selected positions with the solenoids de-energised. This minimises power supply loading, and hence heat generation is small, and also means that the detector 5 will not require shielding against their stray magnetic fields. Inter-leaf friction is used to prevent unwanted movement of the leaves.

It will be seen that the binary nature of the shutter leaf movements enables the shutter assembly to be conveniently addressed by computer. The associated computer can be used to control the movement of the shutter leaves both during the duration of an actual test on a microtitration tray, or during calibration. It will be seen that it can be readily arranged that the computer carries out calibration measurements at all times that an actual test is not being carried out. This means that, once the initial warm-up period is over, the apparatus is constantly ready for measurements to be taken and will apply to those measurements correction factors based on the stored values from the immediately preceding calibration measurements.

Unlike a conventional scanning system the time to select any well is approximately constant, and random access to wells can readily be achieved under computer control. Detection and correction of measurement drift is then possible by interleaved measurement of a reference source.

The objective of the multi leaf shutter system is to achieve positional scanning of a matrix of sources, without needing precise extended X-Y movement of either the source matrix or the detector input aperture. The device consists of a multiplicity of leaf shutters, each with a specific configuration of apertures such that in any position of the shutters only a unique coincidence of apertures allows the detector to 'see' an individual source.

It is clear that to achieve two dimensional scanning with restricted movement of the shutter leaves then movement is necessary along two orthogonal axes. In order to have a simple structure it is advisable to arrange that each shutter leaf rests in one of two positions which can be defined by simple mechanical 'end stops'. It is possible to have more than two positions, but this violates the aim of having the simplest final structure. With two positions the coding of the shutter leaf positions will naturally be interpreted as a binary number.

A possible shutter leaf arrangement is a straightforward binary pattern;
the X-leaves would consist of:-
    1. repeated columns of (1 aperture, 1 blanked)
    2. repeated columns of (2 apertures, 2 blanked)
    3. repeated columns of (4 apertures, 4 blanked) etc. the Y-leaves would consist of:-
    1. repeated rows of (1 aperture, 1 blanked)
    2. repeated rows of (2 apertures, 2 blanked)
    3. repeated rows of (4 apertures, 4 blanked) etc. With all the leaves superimposed, if the source to source matrix pitch is W, then
leaves with 1 aperture must move W,
leaves with 2 apertures must move 2W,
leaves with 4 apertures must move 4W, etc.

The shutter leaves will be moved by means of solenoids or other means of converting binary data output from an electronic controller into the required mechanical movement. This data may be scanned in any sequence (Binary, Gray or randomly) that is convenient for the application; the time taken to move from any position exposed to any other position exposed is merely the time to change shutter positions, unlike an X-Y mechanism which physically travels between positions.

This organisation of the shutter leaves although feasible suffers from the need to move each shutter a different distance, complicating the mechanical design. By considering as example an X-leaf. it will be noted that when an N-aperture leaf is moved along the X-axis by a distance N·W the resultant aperture pattern is simply the logical complement of that before the move:-

```
0000    0000    0000    (before move)
0000    0000    0000
0000    0000    0000
0000    0000    0000


    0000    0000    0000    (after move)
    0000    0000    0000
    0000    0000    0000
    0000    0000    0000
```

By interlacing the shutter leaf pattern, it will be seen that equivalent behaviour is obtained by movement in the orthogonal direction:-

```
0000      0000      0000    (before move)
  0000      0000      0000
0000 ·   0000      0000
  0000      0000      0000


  0000      0000      0000    (after move)
0000      0000      0000
  0000      0000      0000
0000      0000      0000
```

It is seen that no matter what the value of N, the shutter leaf is required only to move a distance W. This is a key advantage for the mechanical design.

However, there is a penalty for this advantage; it is clear that if this method is applied to the N = 1 case then the X and Y leaves become identical. Instead of obtaining a single unique coincidence of apertures, under this configuration the 1-leaves either completely mask the shutter in half the combinations or allow two coincidences in the other half of the combinations. It is clear that since the X and Y 1-leaves MUST match to allow any coincidences then one may be removed as it is redundant. There remains the problem of the pairs of coincidences. This may be overcome by adding the next level of shutter leaf. In fact the dichotomy can be made either top-to-bottom or left-to-right so that this final leaf may either be an X or a Y leaf.

In the general case of a J by K matrix then the shutter leaf orders must include the whole matrix, e.g. for a 12 x 8 matrix the shutter leaves will have to define a 16 x 8 ($2^7$ or 128) matrix. The unused positions have been exploited in the above described design for 'no source' or 'calibration' positions.

For this example four possible and equally useful leaf arrangements would be:-

|  |  |  |  |
|---|---|---|---|
| (a) | Y-leaves | 1, 2, 4, 8, 16 |
|  | X-leaves | 2, 4 |

or

|  |  |  |
|---|---|---|
| (b) | Y-leaves | 1, 2, 4, 8 |
|  | X-leaves | 2, 4, 8 |

or

|  |  |  |
|---|---|---|
| (c) | Y-leaves | 2, 4, 8, 16 |
|  | X-leaves | 1, 2, 4 |

or

|  |  |  |
|---|---|---|
| (d) | Y-leaves | 2, 4, 8 |
|  | X-leaves | 1, 2, 4, 8 |

The particular arrangement chosen for the above-described shutter assembly is (d).

## Claims

1. A shutter assembly comprising a plurality of parallel shutter leaves and means for sliding each said shutter leaf relative to the remainder and wherein each shutter leaf is formed with a pattern of apertures arranged in such a way as to align with certain apertures in other shutter leaves so that, for at least some positions of each shutter leaf at least one aperture in each shutter leaf is in alignment to thereby provide at least one through-aperture from one side of the shutter to the other.

2. A shutter assembly as claimed in claim 1 wherein each shutter leaf is constrained to slide between just two fixed positions, said assembly further including locations means for locating the leaves in those fixed positions.

3. A shutter assembly as claimed in claim 2 in which two sets of shutter leaves are provided, the leaf or leaves of one set being slideable in one direction, and the leaf or leaves of the other set being slideable in a second direction orthogonal to the first.

4. A shutter assembly as claimed in claim 3 wherein the total extent of sliding movement of the leaf or leaves in each set is identical.

5. A shutter assembly as claimed in any one of claims 2 to 4 wherein the total extent of the sliding movement of all of the leaves is identical.

6. A shutter assembly as claimed in any one of claims 2 to 5 wherein the minimum total number of shutter leaves necessary is given by:-

$$N_A = 2^t$$

where $N_A$ -the number of possible through-aperture positions
t = minimum total number of shutter leaves.

7. A shutter assembly as claimed in either one of claims 3 or 4 wherein the possible through-aperture positions in each shutter leaf are arranged in a regular array of columns and rows, with the columns being aligned in said one direction and the rows in said second direction, and wherein the distance between adjacent aperture positions in each column is equal to the total extent of movement of the leaves of one set,. and the distance between adjacent aperture positions in each row is equal to the total extent of movement of the leaves of the other set.

8. A shutter assembly as claimed in claim 7 wherein the apertures in each shutter leaf are positioned in groups, each group comprising a line of adjacent apertures aligned in a direction orthogonal to the direction of sliding movement of the respective leaf.

9. A shutter assembly as claimed in claim 8 wherein each group of apertures is spaced from the adjacent group of apertures in the direction orthogonal to the direction of sliding movement of the respective shutter leaf by a number of aperture positions equal to the number of apertures in each group.

10. A shutter assembly as claimed in either one of claims 8 or 9 wherein the number of apertures in each group is a power of 2, with each shutter leaf within a set of shutter leaves having different numbers of apertures within each group.

11. A shutter assembly as claimed in claim 10 wherein the power of two for the number of apertures in the groups of successive shutter leaves increases by one for each leaf within a set of leaves: i.e. $2^x$, $2^{x-1}$, $2^{x-2}$ etc.

12. A shutter assembly as claimed in claim 11 wherein the number of shutter leaves in said one set is n and the number of shutter leaves in said other set is m, and wherein the number of apertures in each group on the shutter leaves of said one set is $2^0$, $2^1$, $2^2$ .... $2^{n-1}$ respectively for the leaves in said set, and for the other set is $2^1$, $2^2$ .... $2^{m-1}$ respectively for the leaves in said other set.

13. A shutter assembly as claimed in any one of claims 8 to 12 wherein the apertures are arranged such that, in the direction of movement of the respective shutter leaf alternate aperture positions are formed with an aperture - i.e. alternate apertures and spaces.

FIG.1

FIG. 2

FIG. 3

0 273 671

FIG.4

FIG.5

FIG.6

FIG.7

0 273 671

FIG.8

0 273 671

FIG.9

FIG.10

FIG.11

0 273 671

FIG.12

FIG.13

FIG.14